# EUROPEAN PATENT SPECIFICATION

(11) **EP 3 433 443 B1**
(45) Date of publication and mention of the grant of the patent: **06.05.2020**
(21) Application number: 17715829.2
(22) Date of filing: 22.03.2017
(51) Int. Cl.: E04B 1/76, F24D 13/02, F16L 59/08, B32B 23/00

(54) **INSULATION WITH ADJUSTABLE R-VALUE**
ISOLIERUNG MIT EINSTELLBAREM R-WERT
ISOLATION À VALEUR R RÉGLABLE

(30) Priority: 22.03.2016 NL 2016468
(43) Date of publication of application: 30.01.2019
(73) Proprietor: Reflexy Nederland B.V., 1731 MD Winkel (NL)
(72) Inventor: MOERINGS, Leonardus Gijsbertus Theodorus, 1731 MD Winkel (NL)
(74) Representative: EP&C
(86) International application number: PCT/NL2017/050179
(87) International publication number: WO 2017/164735

(56) References cited:
- DE-A1- 10 260 643
- FR-A1- 2 650 532
- GB-A- 2 399 827

## Description

The present invention relates to a layered thermal insulation element such as an insulation panel, insulation blanket or a combination thereof, having a sandwich structure comprising at least two structural layers, at least one insulation layer between said structural layers, and a heating element in said sandwich structure which is connectable to a controller to control a thermal gradient through the panel and/or blanket.

GB 2399827 discloses a thermal insulation assembly comprising two insulating layers with a heating element between the insulating layers. The assembly is mounted with one insulating layer to a building wall. The other insulating layer is covered by a cladding.

US 2006/0081584 of the same applicant discloses a thermal insulation assembly with an outer cladding, an inner cladding, and inner and outer thermal insulation layers sandwiched between said inner and outer cladding. A heating element is arranged between the inner and outer insulation layers.

DE 10260643 discloses a wall heating element for an infrared-C cabin. It comprises a warm side metal plate and a cold side metal plate between which an intermediate structural layer is present. The intermediate structural layer presses a heating element against the warm side metal plate. Between the intermediate structural plate and the cold side metal plate one or more insulation layers are present. The intermediate structural layer is covered on both sides with an aluminium foil. The present invention has for an object to provide an improved layered insulation element.

This object is achieved by a layered insulation element according to the preamble of claim 1, wherein the layered insulation element furthermore comprises radiant barrier layers arranged on either side of the insulation layer, and wherein the heating element comprises an infrared heating film that is arranged between one of the structural layers and one of the radiant barrier layers.

The layered insulation element according to the invention can be applied for thermal insulating purposes in building structures, cold stores, cool boxes etc. In a practical embodiment the layered insulation element can take the form of a panel which can for example be used for insulating a roof or as a wall cladding. In another embodiment the layered insulation element may take the form of an insulation blanket. It is also possible to have a combination of a panel and a blanket.

By applying a controlled electrical power to the infrared heating film, infrared radiation is emitted between the structural layer and a radiant barrier layer. The infrared radiation is mainly reflected by the radiant barrier layer whereby the radiation is directed towards the structural layer and will have a heating effect there. Thereby the thermal gradient in the thickness direction of the sandwich structure will be adjusted, whereby the thermal resistance (often referred to in the art as the R-value) can be increased. In particular the thermal gradient over the insulation layer is adjusted.

The power use of the infrared heating film may, according to an aspect of the invention, vary in the range 0-5 W/m² and the electrical power supplied to the heating film is controlled by a controller. In a practical situation when the layered insulation element according to the invention is in the form of a panel used for roof insulation for example a consumption of about 2 W/m² is sufficient to provide an efficient adjustment of the thermal resistance of the insulation panel. With a relatively low level of energy that has to be used to operate the infrared heating film a considerably higher saving of energy due to the reduction of heat losses is achieved.

Another advantage is that the proposed solution with infrared heating film provides that the overall panel thickness can remain relatively small. Especially in combination with known thin insulation layers made of aerogel or a thin insulation sheet for example sold under the trademark Aluthermo®, an overall thin insulation panel is possible whilst a high thermal resistance of the insulation panel can be achieved due to active control thereof.

In a preferred embodiment the layered insulation element comprises two outer structural layers and an intermediate structural layer, wherein between each of the outer structural layers and the intermediate structural layer an infrared heating film as well as an insulation layer having said radiant layers are arranged.

This particular embodiment allows an independent control of the two infrared heating films, such that two thermal gradients can be adjusted independently from each other. Hereby a thermal resistance characteristic can be better adjusted to specific environmental circumstances. The intermediate structural layer is acting as a heat buffer.

In a practical embodiment wherein the layered insulation element is a panel with three structural layers and two insulation layers the overall thickness may be around 55 mm.

As such the infrared heating foil is suitable to be powered with more than 5 W/m² that is mentioned in the above. Thus, if for example at the inner side of an insulation element according to the invention the temperature is to be maintained at room temperature (e.g. 20 °C), and the temperature at the outer side of the insulation element can range from -15°C to 45°C, it would be possible to feed more electrical power (e.g. in the range 5 - 100 W/m²) to the infrared heating foil to achieve that the inner side of the layered insulation element is maintained at room temperature. However, this is not what is intended by the invention. The invention proposes to apply sufficient layers such that the IR heating foils can be operated within the moderate power range (0 - 5 W/m²) to maintain the desired temperature at the inner side of the insulation element. In particular, if a certain layered insulation element (e.g. a panel) is not sufficient to maintain the electrical power use within the desired moderate range, a layered insulation element having an additional structural layer, an additional insulation layer with the associated radiant reflecting layers, and an additional infrared heating foil can be used. In this way the infrared heating foils can be operated each within the moderate range of 0 - 5 W/m² and preferably around 2 W/m².

Thus, in a practical embodiment, wherein the temperature difference to be compensated is increased with respect to the embodiment described in the above (having three structural layers and two insulation layers) the layered insulation element may be a panel with four structural layers and three insulation layers the overall thickness may be around 75 mm.

Hence, the overall thickness of the layered insulation element is moderate in view of the insulation effectiveness that can be achieved, which is advantageous in view of the use of space in for example a building. At the same time the energy use of the IR heating elements is maintained at a moderate level by the invention.

In a further preferred embodiment one of the infrared heating films is arranged against one of the outer structural layers and wherein the other of the infrared heating films is arranged against the intermediate structural layer.

The radiant barrier layers may be made of several materials suitable for blocking thermal radiation. One suitable material is an aluminium foil or a gold coloured aluminium foil.

The insulation layers may be made of known suitable insulation materials. Possible insulation materials/products comprise aerogel, extruded polystyrene (XPS) foam, mineral wools or multilayer products such as Aluthermo®. When the insulation panel has multiple insulation layers, the insulation layers can be made of the same material/product or of different materials/products.

The structural layers in the layered insulation element can be made of wooden panels or plastic panels, whereby a layered insulation panel results. Also other suitable elements that provide structural strength can be used.

The invention also relates to a method for controlling a thermal gradient through an insulation panel as described in the above, wherein the power use of the infrared heating foil is maintained within the range 0 - 5 W/m².

The invention will be elucidated in the following detailed description with reference to the drawing, in which:
Fig. 1 shows a cross sectional view of an embodiment of an insulation panel according to the invention, and
Fig. 2 shows a cross sectional view of another embodiment of an insulation panel according to the invention.

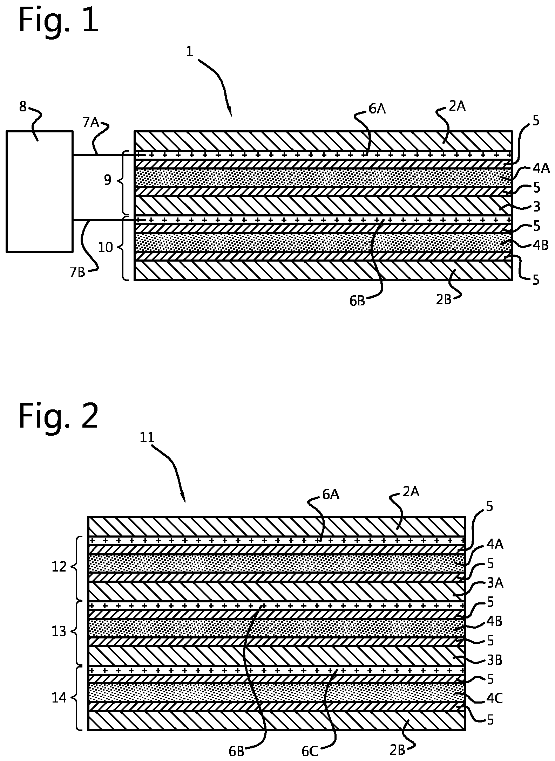

Fig. 1 shows a cross section of a layered insulation panel 1 having two outer structural layers 2A and 2B. The panel 1 has one intermediate structural panel 3. The structural panels 2a, 2B and 3 may be panels made of wood, but also plastic panels are for example suitable. The panels 2A, 2B, 3 may each be made of a different material, but may also be all of the same material.

Between the structural layers 2A and 3 is arranged an insulation layer 4A. Between the structural layers 2B and 3 is arranged an insulation layer 4B.This insulation layers 4A and 4B may be made of the same or of different insulation material. Non-limiting examples of suitable insulation materials are aerogel, extruded polystyrene (XPS) foam or multilayer products such as Aluthermo® which allow for relatively thin insulation layers. Mineral wool is also possible as a suitable insulation material.

On each side of the insulation layers 4A, 4B is arranged a radiant barrier layer 5. This is in practise often a aluminium foil which reflects radiation. In the Aluthermo® product such an aluminium layer is already incorporated. With other insulation materials the radiant barrier layers might be provided separately from the insulation material.

Between the outer structural layer 2A and the radiant barrier layer 5 of the insulation layer 4A is arranged an infrared heating foil 6A. This infrared heating foil 6A is arranged directly against the outer structural layer 2A and the radiant barrier layer 5 of the insulation layer 4A.

Between the intermediate structural layer 3 and the radiant barrier layer 5 of the insulation layer 4B is arranged infrared heating foil 6B. This infrared heating foil is arranged directly against the intermediate structural layer 3 and the radiant barrier layer 5 of the insulation layer 4B.

The infrared heating foils 6A and 6B are connected by cables 7 to a control unit 8. With the control unit 8 the power fed to the infrared heating foils 6A, 6B is controlled within a range, which may be 0 - 5 W/m².

Operationally seen the panel 1 can be divided in its thickness direction in a first section indicated by reference numeral 10 and a second section indicated by reference numeral 9. The first section 10 includes consecutively the layers 2B, 5, 4B, 5 and 6B. The second section 9 includes consecutively 3, 5, 4A, 5 and 6A. Each panel section 9, 10 thus has a IR heating foil 6A, 6B. The temperature differences of the two sections 9, 10 are controllable to regulate the transfer of heat/cold from one section 9, 10 to the other section 9, 10. By feeding electrical power to the heating elements 6A and 6B, the layers in both sections 9 and 10 are warming up and the second section 9 will act as a heat buffer.

If for example the insulation panel 1 is in a practical situation in which the temperature at the outer side of the structural layer 2B is 5°C, and on the inner side of the structural layer 2A is 21°C. The temperature in the second section 9 is for example 24 - 25°C, whilst the temperature in the first section 10 is within the range 10 -15°C. This can all be controlled by controlling the electrical power use of the IR heating foils 6A and 6B independently at a moderate power range of 0 - 5 W/m².

It is possible that by the use of a certain insulation material, in combination with a certain thickness of the insulation layer 4A, 4B, the insulation panel will not be sufficiently effective to maintain the temperature at the inner side at 21°C, while the temperature at the outside is still 5°C, when using only a moderate amount of electrical power (e.g. 0 - 5 W/m²). In that situation one should consider to use a thicker insulation panel, such as the one shown in Fig. 2.

Fig. 2 shows an insulation panel 11 which comprises essentially the same elements as the insulation panel 1 in Fig. 1, except that there is a third panel section.

The first panel section 14 includes the outer panel 2B, the insulation layer 4C with the associated radiant barrier layers 5, and the infrared heating foil 6C. The second panel section 13 includes the intermediate structural layer 3B, the insulation layer 4B with the associated radiant barrier layers 5, and the infrared heating foil 6B. The third panel section 12 includes the intermediate structural layer 3A, the insulation layer 4A with the associated radiant barrier layers 5, and the infrared heating foil 6A.

In a similar example as described for the embodiment of Fig. 1, the insulation panel 1 is in a practical situation in which the temperature at the outer side of the structural layer 2B is 5°C, and on the inner side of the structural layer 2A is 21°C. The temperature in the second section 13 is then for example 24 - 25°C, whilst the temperature in the first section 10 is within the range 10 -15°C and in the third section 12 is 17-18 °C. This can all be controlled by controlling the electrical power use of the IR heating foils 6A, 6B, 6C independently at a moderate power range of 0 - 5 W/m².

## Claims

1. Layered thermal insulation element (1, 11) having a sandwich structure comprising at least two structural layers (2A, 2B, 3, 3A, 3B) at least one insulation layer (4A, 4B, 4C) between said structural layers (2A, 2B, 3, 3A, 3B), and a heating element in said sandwich structure which is connectable to a controller (8) to control a thermal gradient through the layered insulation element (1, 11),
**characterised in that** the layered insulation element (1, 11) furthermore comprises radiant barrier layers (5) arranged on either side of the insulation layer (4A, 4B, 4C), and wherein the heating element comprises an infrared heating film (6A, 6B, 6C) that is arranged directly between one of the structural layers (2A, 2B, 3, 3A, 3B) and one of the radiant barrier layers (5).

2. Layered thermal insulation element according to claim 1, wherein the sandwich structure comprises two outer structural layers (2A, 2B) and at least one intermediate structural layer (3, 3A, 3B), wherein between each of the outer structural layers (2A, 2B) and the at least one intermediate structural layer (3, 3A, 3B) an infrared heating film (6A, 6B, 6C) as well as an insulation layer (4A, 4B, 4C), having said radiant barrier layers (5), are arranged.

3. Layered thermal insulation element according to claim 2, wherein one of the infrared heating films (6A) is arranged against one of the outer structural layers (2A) and wherein the other(s) of the infrared heating films (6B, 6C) is/are arranged against the intermediate structural layer(s) (3; 3A, 3B).

4. Layered thermal insulation element according to any one of the preceding claims, wherein the radiant barrier layers (5) are made of an aluminium foil.

5. Layered thermal insulation element according to any one of the preceding claims, wherein the structural layers (2A, 2B, 3, 3A, 3B) are made of wood.

6. Layered thermal insulation element according to any one of the preceding claims, wherein the structural layers (2A, 2B, 3, 3A, 3B) are made of plastics material.

7. Method for controlling a thermal gradient through a layered thermal insulation element (1, 11) according to any one of the preceding claims, wherein the power use of the infrared heating film (6B, 6C) is maintained within the range 0 - 5 W/m².

## Patentansprüche

1. Geschichtetes thermisches Isolationselement (1, 11) mit einer Sandwich-Struktur, umfassend zumindest zwei Strukturschichten (2A, 2B, 3, 3A, 3B), zumindest eine Isolationsschicht (4A, 4B, 4C) zwischen den Strukturschichten (2A, 2B, 3, 3A, 3B) und ein Heizelement in der Sandwichstruktur, das mit einer Steuerung (8) zum Steuern eines Wärmegradienten durch das geschichtete Isolationselement (1, 11) verbindbar ist,
**dadurch gekennzeichnet, dass** das geschichtete Isolationselement (1, 11) zudem Strahlungssperrschichten (5) umfasst, die auf beiden Seiten der Isolationsschicht (4A, 4B, 4C) angeordnet sind, und wobei das Heizelement eine Infrarotheizfolie (6A, 6B, 6C) umfasst, die direkt zwischen einer der Strukturschichten (2A, 2B, 3, 3A, 3B) und einer der Strahlungssperrschichten (5) angeordnet ist.

2. Geschichtetes thermisches Isolationselement nach Anspruch 1, wobei die Sandwich-Struktur zwei äußere Strukturschichten (2A, 2B) und zumindest eine zwischenliegende Strukturschicht (3, 3A, 3B) umfasst, wobei zwischen jeder der äußeren Strukturschichten (2A, 2B) und der zumindest einen zwischenliegenden Strukturschicht (3, 3A, 3B) eine Infrarotheizfolie (6A, 6B, 6C) sowie eine Isolationsschicht (4A, 4B, 4C) mit den Strahlungssperrschichten (5) angeordnet sind.

3. Geschichtetes thermisches Isolationselement nach Anspruch 2, wobei eine der Infrarotheizfolien (6A) an einer der äußeren Strukturschichten (2A) angeordnet ist, und wobei die andere(n) der Infrarotheizfolien (6B, 6C) an der (den) zwischenliegenden Strukturschicht(en) (3; 3A, 3B) angeordnet ist (sind).

4. Geschichtetes thermisches Isolationselement nach einem der vorhergehenden Ansprüche, wobei die Strahlungssperrschichten (5) aus einer Aluminiumfolie hergestellt sind.

5. Geschichtetes thermisches Isolationselement nach einem der vorhergehenden Ansprüche, wobei die Strukturschichten (2A, 2B, 3, 3A, 3B, 3C) aus Holz hergestellt sind.

6. Geschichtetes thermisches Isolationselement nach einem der vorhergehenden Ansprüche, wobei die Strukturschichten (2A, 2B, 3, 3A, 3B, 3C) aus einem Kunststoffmaterial hergestellt sind.

7. Verfahren zum Steuern eines Wärmegradienten durch ein geschichtetes thermisches Isolationselement (1, 11) nach einem der vorhergehenden Ansprüche, wobei der Leistungsverbrauch der Infrarotheizfolie (6B, 6C) innerhalb des Bereichs von 0 bis 5 W/m² gehalten wird.

## Revendications

1. Élément (1, 11) d'isolation thermique en couches ayant une structure en sandwich comprenant au moins deux couches structurelles (2A, 2B, 3, 3A, 3B), au moins une couche d'isolation (4A, 4B, 4C) entre lesdites couches structurelles (2A, 2B, 3, 3A, 3B), et un élément chauffant dans ladite structure en sandwich, qui peut être connecté à un contrôleur (8) pour contrôler un gradient thermique à travers l'élément (1, 11) d'isolation en couches,
**caractérisé en ce que** l'élément (1, 11) d'isolation thermique en couches comprend en outre des couches (5) de barrière radiante disposées de part et d'autre de la couche d'isolation (4A, 4B, 4C), et dans lequel l'élément chauffant comprend un film chauffant infrarouge (6A, 6B, 6C) qui est disposé directement entre l'une des couches structurelles (2A, 2B, 3, 3A, 3B) et l'une des couches (5) de barrière radiante.

2. Elément d'isolation thermique en couches selon la revendication 1, dans lequel la structure en sandwich comprend deux couches structurelles (2A, 2B) externes et au moins une couche structurelle (3, 3A, 3B) intermédiaire, dans lequel, entre chacune des couches structurelles (2A, 2B) externes et la au moins une couche structurelle (3, 3A, 3B) intermédiaire, un film chauffant infrarouge (6A, 6B, 6C) ainsi qu'une couche (4A, 4B, 4C) d'isolation, avec lesdites couches (5) de barrière radiante, sont disposés.

3. Elément d'isolation thermique en couches selon la revendication 2, dans lequel l'un des films (6A) chauffants infrarouges est disposé contre l'une des couches structurelles (2A) extérieures et dans lequel l'autre ou les autres films chauffants infrarouges (6B, 6C) est/sont agencés contre la ou les couches structurelles (3 ; 3A, 3B) intermédiaires.

4. Elément d'isolation thermique en couches selon l'une quelconque des revendications précédentes, dans lequel les couches (5) de barrière rayonnante sont constituées d'une feuille d'aluminium.

5. Élément d'isolation thermique en couches selon l'une quelconque des revendications précédentes, dans lequel les couches structurelles (2A, 2B, 3, 3A, 3B) sont en bois.

6. Élément d'isolation thermique en couches selon l'une quelconque des revendications précédentes, dans lequel les couches structurelles (2A, 2B, 3, 3A, 3B) sont en matière plastique.

7. Procédé pour contrôler un gradient thermique à travers un élément (1, 11) d'isolation thermique en couches selon l'une quelconque des revendications précédentes, dans lequel la consommation d'énergie du film chauffant infrarouge (6B, 6C) est maintenue dans la plage allant de 0 à 5 W/m².
